# EUROPEAN PATENT SPECIFICATION

(11) **EP 3 036 918 B1**
(45) Date of publication and mention of the grant of the patent: **31.05.2017**
(21) Application number: 13765760.7
(22) Date of filing: 21.08.2013
(51) Int. Cl.: H04S 7/00, H04N 13/04

(54) **VIDEO DISPLAY HAVING AUDIO CONTROLLED BY VIEWING DIRECTION**
VIDEOANZEIGE MIT DURCH BLICKRICHTUNG GESTEUERTEM AUDIO
AFFICHEUR VIDÉO COMPORTANT UN SIGNAL AUDIO COMMANDÉ PAR LA DIRECTION D'OBSERVATION

(43) Date of publication of application: 29.06.2016
(73) Proprietor: Thomson Licensing, 92130 Issy-les-Moulineaux (FR)
(72) Inventor: KELLER, Anton Werner, CH-8905 Arni (CH); BERNOLD, Roland Rene, CH-Luzern (CH)
(74) Representative: Huchet, Anne
(86) International application number: PCT/IB2013/001812
(87) International publication number: WO 2015/025186

(56) References cited:
- WO-A1-2011/064438
- WO-A1-2013/036237
- US-A1- 2007 104 341
- US-A1- 2011 096 941
- HANSEN D W ET AL: "Noise tolerant selsction by gaze-controlled pan and zoom in 3D", EYE TRACKING RESEARCH & APPLICATIONS : PROCEEDINGS ; ETRA 2008 ; [EYE TRACKING RESEARCH AND APPLICATIONS SYMPOSIUM] ; SAVANNA, GEORGIA, USA, MARCH 26 - 28, 2008, ACM, NEW YORK, NY, [Online] 26 March 2008 (2008-03-26), pages 205-212, XP002719845, DOI: 10.1145/1344471.1344521 ISBN: 978-1-59593-982-1 Retrieved from the Internet: URL:http://delivery.acm.org/10.1145/135000 0/1344521/p205-hansen.pdf?ip=145.64.254.24 3&id=1344521&acc=ACTIVE%20SERVICE&key=986B 26D8D17D60C88D75A192E3112143&CFID=40724578 8&CFTOKEN=52834538&__acm__=1391683834_aa93 46eb19c6293a26a590f26ab9eefc> [retrieved on 2014-02-06]

## Description

### Field of the Invention

The invention relates to a video display apparatus controlled by a viewer viewing direction.

### Background of the Invention

"Pan & scan" (pan) is a term typically referred to cropping off horizontal sides of an original widescreen image having, for example, an aspect ratio of 2.35:1. Typically, pan may be used for fitting the most significant portion of the picture for display on, for example, a 16:9 aspect ratio display screen. The analogous cropping off in the vertical direction is typically referred to as "tilt & scan" (tilt). Zoom function may be used for better recognizing details. The zoom function may also be chosen for adapting pictures with different display ratio on the given screen from letterbox to different zoom modes. Different combinations of zoom, scan and tilt functions may be selected and controllable by a viewer using, for example, a conventional hand held remote-control unit.

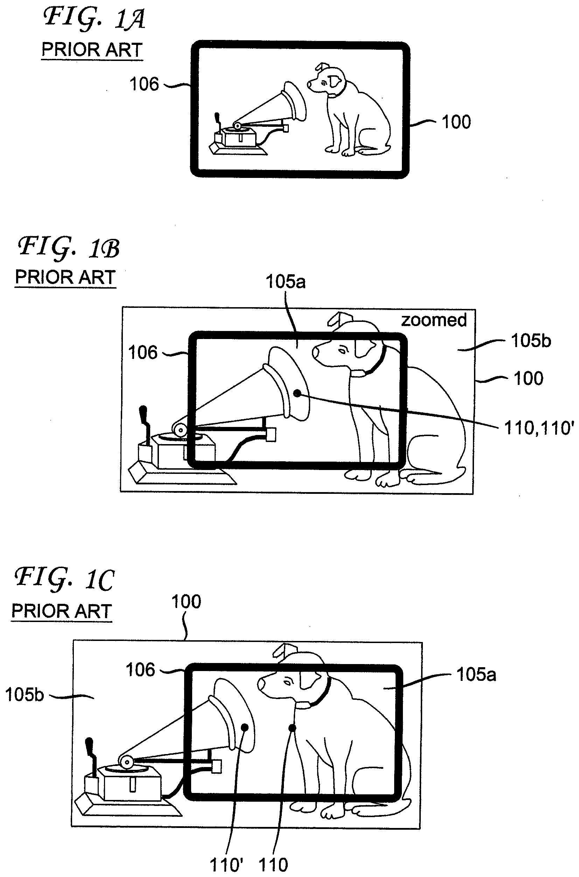

FIGURE 1a illustrates a picture 100 displayed on a display screen 106 without cropping and in a non-zoomed mode. In FIGURE 1b, a zoom function is applied to picture 100 such that only a picture portion 105a of picture 100 is displayed on display screen 106. In FIGURE 1b, portion 105a or picture 100 is zoomed center by having a center point 110 of display screen 106 at the same point as a center point 110' of picture 100. The zoom function results in a portion 105b of picture 100 being invisible for being outside the viewing area of screen 106. FIGURE 1c illustrates picture portion 105a, displayed on display screen 106 that results from applying a combination of both a zoom function and a pan function. As a result, center points 110 and 110' do not coincide. Similar symbols and numerals in FIGURES 1a, 1b and 1c indicate similar items or functions.

When a viewer is watching a movie on display screen 106 of FIGURE 1b, a particular object, not shown, may catch the viewer's attention. Such object may move in relation to screen 106 in a particular direction, for example, to the right of FIGURE 1b. Consequently, the viewer might tend to follow the moving object by changing the viewer's head direction and/or the direction to which the viewer's eyes are directed to the right of FIGURE 1b.

It may be desirable to employ a dynamically tracking pan function, a dynamically tracking tilt function or a combination thereof (each being referred herein as dynamically tracking pan/tilt function) responsive to the viewer head/eye movement. Such function may be used in order to maintain the moving object within visible portion 105a instead of being invisible.

Advantageously, as long as the viewer's viewing direction is directed toward a center region of a display screen, dynamically tracking pan/tilt function is not performed or is disabled. Once the viewer's viewing angle crosses a first threshold angular direction, away from the screen center and towards, for example, a right side border of the screen, dynamically tracking pan function is enabled so as to shift the displayed picture in the opposite direction. The result is that the aforementioned moving object is shifted closer to the center of fhe screen. Advantageously, that portion of the zoomed picture that has been heretofore invisible will, consequently, shift into the viewing area of the display screen. Therefore, the moving object will, advantageously, tend to remain closer to the screen center.

Assume that, after the pan function is initiated, the viewer's viewing angular direction begins changing in the opposite direction. This may result, for example, because the moving object has shifted by the aforementioned picture shift operation of the pan function. It may be desirable to avoid a picture bounce in the vicinity of the first threshold angular direction.

Advantageously, the viewer's viewing angular direction is required to cross a threshold angular direction that is smaller than the first threshold angular direction in order to suspend or stop further pan function operation. Thereby, advantageously, a hysteresis feature is incorporated into the pan/tilt function.

Advantageously, when the viewer's viewing angular direction crosses an even larger, second threshold angular direction away from screen center and towards the same side border of the screen, the picture will pan at a faster rate than when the viewer's viewing angular direction is between the first and second threshold angular directions. The faster rate is applied, advantageously, to prevent the moving object from disappearing from the visible portion of the screen.

The hysteresis feature can also be incorporated with respect to crossing the second threshold angular direction. Similarly, incorporating multiple thresholds and corresponding hysteresis features are also possible.

Assume that, after the picture shifting has stopped, the viewer turns the head in an opposite direction to that previously triggering the pan function. When the viewer's viewing angular direction exceeds a third threshold angular direction, pan function in the opposite direction is initiated.

Advantageously, the third threshold angular direction is adaptably determined by the extent of the accumulation of the picture shifting present at the time the picture shifting stopped. Advantageously, a hysteresis feature may also be incorporated with respect to crossing the third threshold angular direction.

A sudden fast rate of change of the eye movement, head-tracking or face orientation of the viewer might indicate a disturbance unrelated to the displayed picture. Therefore, advantageously, detection of such fast rate of change will have no effect on the pan/tilt function.

It may be desirable to complement the zoom or dynamically tracking pan/tilt function by making the perceived sources of sound such as speakers dynamically follow the dynamically tracking pan/tilt function. Advantageously, this is accomplished by adaptively mixing, for example, two stereo channels in response to control signals that control the pan/tilt function. Thus, as the displayed image shifts by the dynamically tracking pan/tilt function, the locations from which the sound is perceived to originate also track the display image to which the zoom or tracking pan/tilt function is applied. In short, the stereophonic width dynamically varies in accordance with the stereoscopic width.

An article entitled, THE SIMULATION OF MOVING SOUND SOURCES by John M. Chowning, (J. Audio Eng. Soc.19,2-6,1971) describes an arrangement in which an illusory sound source can be moved through an illusory acoustical space. A number of independent audio channels is transformed into two or four channels where the location static or dynamic of each input channel can be independently controlled in an illusory environment. The method controls the distribution and amplitude of direct and reverberant signals between the loudspeakers.

United States Patent No. 5,046,097, Lowe, et al., describes a process to produce the illusion of distinct sound sources distributed throughout the three-dimensional space containing the listener, using conventional stereo playback equipment.

United States Patent No. 5,742,687 shows an embodiment for an audio-visual reproduction system in the form of, for example, a television set. In the case where a stereo audio signal is supplied, the position of the sound source that reproduces the left channel will present a virtual shift to the left. Similarly, the source representing the right channel signal will undergo a virtual shift to the right.

United States Patent No. 4,219,696, Takuyo Kogure et al., discloses mathematics which would allow placement of sound image anywhere in the plane containing the two loudspeakers and the listener's head, using modified stereo replay equipment with two or four loudspeakers. The system relies on accurate characterization, matching, and electrical compensation of the complex acoustic frequency response between the signal driving the loudspeaker and the sound pressure at each ear of the listener

United States Patent No. 4,524,451, Koji Watanabe, explains a basis for the creation of "phantom sound sources" lateral to or behind the listener.

United States Patent No. 5,987,141, Hoover, teaches a stereo expander in which stereophonic audio processing system having left and right stereophonic sound channels with respective loudspeakers therefor is presented. The system is provided with spatial expansion of the stereophonic sound so that a first pair of spaced-apart loudspeakers will acoustically appear to be spaced further apart than they actually are. WO 2013/036237 A1 discloses a video display apparatus, comprising a source of a video/audio signal containing picture and audio information associated with a picture to be displayed on a display screen, a sensor for sensing a viewing direction of a viewer with respect to said display screen, a processor responsive to an output signal of said sensor and coupled to said display screen, and an audio processor responsive to said video/audio signal and coupled to a plurality of audio transducers for producing sound therein, said audio processor being responsive to said output signal of said sensor.

WO 2011/064438 A1 discloses a method for providing an audio zooming process. The audio zooming enables the user to move the listening position based on zoomable audio points to focus on the relevant sound sources in the audio scene.

### Summary of the Invention

A video display apparatus embodying an inventive feature includes a source of a video/audio signal containing picture and audio information associated with a picture to be displayed on a display screen. A sensor is provided for sensing a viewing direction of a viewer with respect to the display screen. A processor is responsive to an output signal of the sensor and coupled to the display screen for applying a pan/tilt function to the displayed picture to shift the displayed picture with respect to the display screen in a manner that varies in accordance with corresponding variations in the viewing direction. An audio processor is responsive to the video/audio signal and coupled to a plurality of audio transducers for producing sound therein. The audio processor is responsive to the output signal of the sensor for dynamically varying a virtual shift of the sound produced in the transducers in a manner that varies in accordance with corresponding variations in the viewing direction.

In carrying out a further inventive feature, the audio processor is further responsive to content of the picture for varying the sound shift previously obtained in response to a change in the displayed picture content.

A video display apparatus embodying another inventive feature includes a source of a video/audio signal containing picture information and audio information associated with a picture to be displayed on a display screen. A processor is responsive to a zoom command of a viewer and coupled to the display screen for applying a zoom function with respect to the displayed picture. An audio processor is responsive to the zoom command and coupled to a plurality of audio transducers for modifying audio signals applied to the audio transducers to vary a virtual shift of a sound produced in the transducers in accordance with the zoom command.

### Brief Description of the Drawings

The preferred embodiment of the present invention will be described below in more detail with reference to the accompanying drawings in which:
FIGURE 1a illustrates in a front view a picture displayed on a display screen without cropping and in non-zoomed mode, in accordance with the prior art;
FIGURE 1b illustrates in a front view a picture displayed on a display screen when a zoom function is applied to the picture, in accordance with the prior art;
FIGURE 1c illustrates in a front view a picture portion displayed on the display screen when both a zoom function and a pan function are applied, in accordance with the prior art;
FIGURE 2 illustrates: a block diagram of a system, embodying an inventive feature;
FIGURES 3a and 3b illustrate, each, a pair of cameras for sensing viewer viewing direction and for controlling the arrangement of FIGURE 2;
FIGURES 4a, 4b, 4c and 4d illustrate, each, a top view of a display screen viewed by a viewer, for explaining the operation of the system of FIGURE 2;
FIGURES 5a and 5b illustrate, each, a front view of display screen for explaining the operation of the system of FIGURE 2; and
FIGURE 6 illustrates a block diagram of a portion of an audio processor of FIGURE 2 that performs a virtual audio shift of a pair of stereo audio channels in response to an output of the cameras of FIGURES 3a and 3b.

### Detailed Description

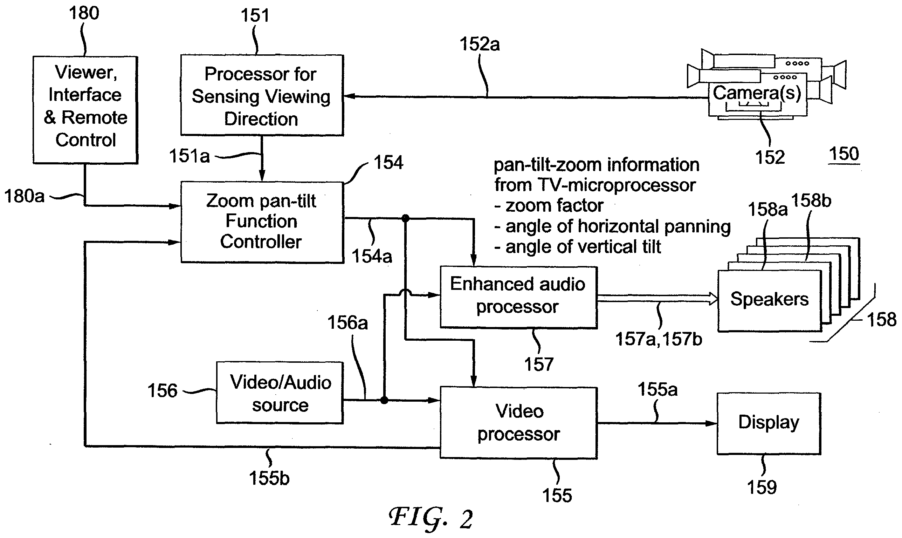

FIGURE 2 illustrates a block diagram of a system 150, embodying an inventive feature. Similar symbols and numerals in FIGURES 1a, 1b, 1c and 2 indicate similar items or functions.
System 150 of FIGURE 2 includes an input video/audio source 156 that applies a video containing portion of an input video/audio signal 156a to a video processor 155 and an audio containing portion of input video/audio signal 156a to an enhanced audio processor 157. Video processor 155 derives picture information and enhanced audio processor 157 derives audio information from the corresponding portions of video/audio signal 156a in a conventional manner.

A zoom, pan/tilt function controller 154 is responsive to a signal 180a produced in a conventional way in a viewer interface and remote control 180. Controller 154 generates a signal 154a that is applied to video processor 155. Video processor 155 applies in a conventional manner a conventional zoom or pan/tilt function in a conventional video display 159 in accordance with viewer's initiated commands via interface and remote control 180. Video processor 155 generates an output video signal 155a for driving video display 159.

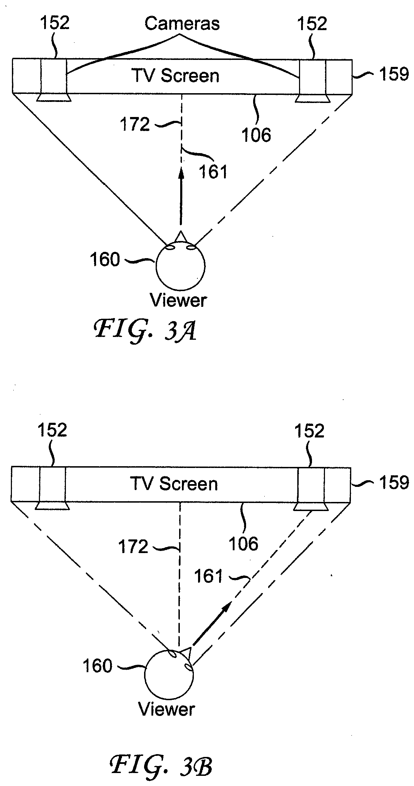

Each of FIGURES 3a and 3b illustrates schematically a top view of a pair of cameras 152 of system 150 of FIGURE 2 mounted in the vicinity of the left and right sides, respectively, of display screen 106 of FIGURES 3a and 3b. Similar symbols and numerals in FIGURES 1a-1c, 2, 3a and 3b indicate similar items or functions. Cameras 152 of FIGURES 3a and 3b provide together, stereoscopic picture information that enables a conventional processor for sensing viewing direction 151 to sense viewing direction 161 of a viewer 160. In the example of FIGURE 3a, viewing angular direction 161 is perpendicular to display screen 106 of video display 159. On the other hand, viewing angular direction 161 in the example of FIGURE 3b is directed to the extreme right side of display screen 106.

Cameras 152 of FIGURE 2 generate a pair of output signals 152a are applied to processor for sensing viewing direction 151 for sensing at least one of face, head or eyes position of viewer 160 of FIGURES 3a and 3b with respect to display screen 106. A single stereoscopic camera can be used instead of the pair of cameras 152. Also, a non- stereoscopic single camera with enhanced processing of face or eye movement detection can be used instead of pair cameras 152. Processor for sensing viewing direction 151 of FIGURE 2 generates in a conventional manner an output signal 151 a that is indicative of a present viewing direction of viewer 160 of FIGURES 3a and 3b.

Advantageously, zoom, pan/tilt function controller 154 of FIGURE 2 is responsive to output signal 151a for generating control signal 154a. Control signal 154a produced in controller 154 is applied to video processor 155 in a manner to produce dynamically tracking pan/tilt function.

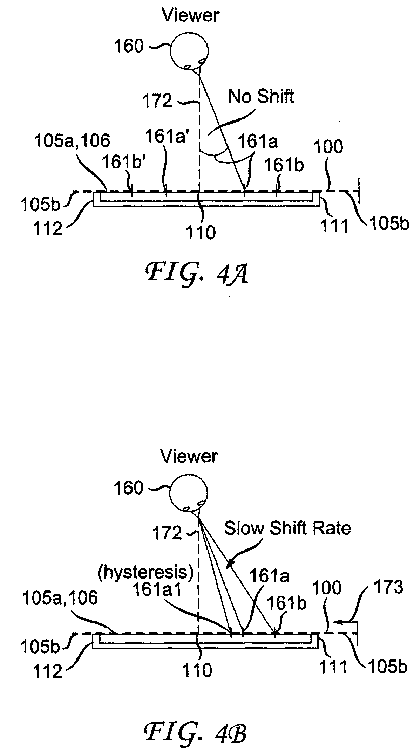

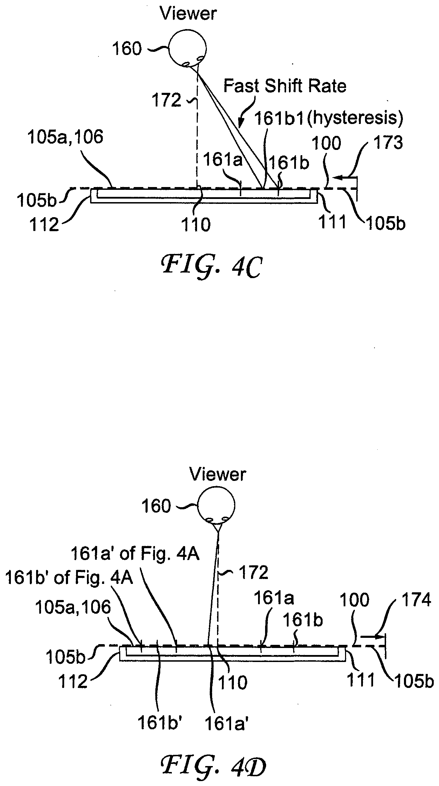

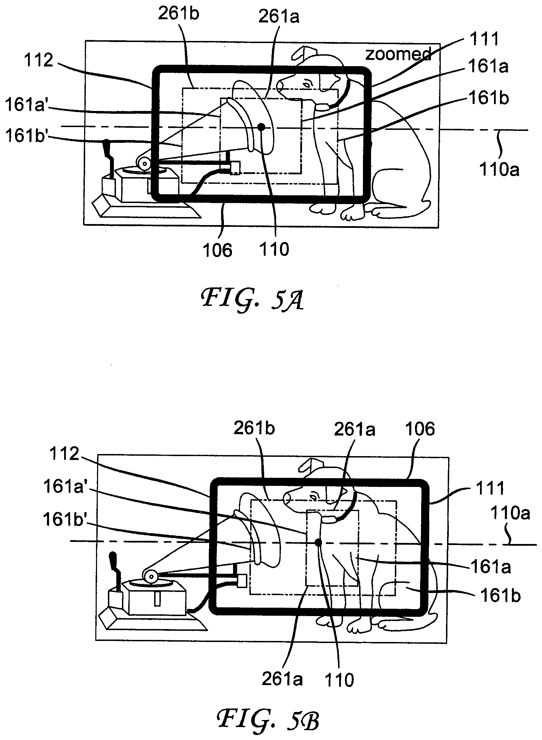

FIGURES 5a and 5b are similar to FIGURES 1b and 1c, respectively, except as explained later on. Each of FIGURES 5a and 5b shows a horizontal line 110a extending through screen center 110 for explanation purposes. FIGURES 4a, 4b, 4c and 4d collectively depict a direction 161a1, a direction 161a, a direction 161b1, a direction 161b, a direction 161a' and a direction 161b'. Each of directions 161a1, 161a, 161b1, 161b, 161a' and 161b' intersects, for example, in a spot 161a1, a spot 161a, a spot 161b1, a spot 161b, a spot 161a' and a spot 161b', respectively, disposed in a horizontal direction along, for example, horizontal line 110a of FIGURES 5a and 5b. In FIGURES 5a and 5b, intersection spots 161a1 and 161b1 have been omitted. Similar symbols and numerals in FIGURES 1a-1c, 2, 3a, 3b, 4a-4d, 5a and 5b indicate similar items or functions.

In FIGURE 4a, picture 100 is initially zoomed center in a way similar to that explained with respect to FIGURE 1b or 5a. Assume that, when picture 100 is initially zoomed center, as in FIGURE 4a, an object, not shown, that is displayed in display screen 106 in visible portion 105a of FIGURE 5a, moves in a horizontal direction parallel to horizontal line 110a towards a side edge 111 of screen 106 that is at the right of each of FIGURES 4a, 4b, 4c and 4d. Also assume that, when picture 100 is zoomed center, viewer 160 turns the head or eyes to the right side of FIGURE 4a that is the left side with respect to viewer 160, for the purpose of, for example, following the moving object.

As long as a viewing angular direction of viewer 160 is within an angular range that is smaller than threshold angular direction 161a, dynamically tracking pan function is not applied or is disabled. When viewer 160 viewing angular direction crosses threshold angular direction 161 a of FIGURE 4b or, in other words, when a difference between viewer 160 viewing angular direction and threshold angular direction 161a changes polarity, dynamic tracking pan function is applied so as to shift picture 100 gradually to the left of FIGURE 4b at a slow first rate.

Advantageously, after crossing threshold angular direction 161a and as long as viewer 160 viewing angular direction remains at an angular direction that is larger than a hysteresis providing threshold angular direction 161a1, dynamically tracking pan function is further applied so that picture 100 additionally shifts to the right with respect to viewer 160 that is to the left of FIGURE 4b, as indicated by the direction of an arrow 173. Threshold angular direction 161a1 is slightly smaller than angle 161a for providing hysteresis that, advantageously, prevents picture back and forth bouncing.

Advantageously, when viewer 160 viewing angular direction becomes larger than a threshold angular direction 161b of FIGURE 4c or, in other words, when a difference between viewer 160 viewing angular direction and threshold angular direction 161b changes polarity, additional shifting continues but, advantageously, at a faster rate than in the range between angular directions 161a1 and 161b. Similarly to the threshold feature discussed before, after crossing threshold 161b shifting picture 100 will progress at the relatively faster rate, as long as viewer 160 maintains a viewing angular direction that is larger than a threshold angular direction 161b1. Threshold angular direction 161b1 is slightly smaller than threshold angular direction 161b in a manner to provide hysteresis. Should viewer 160 viewing angle become smaller than hysteresis providing threshold angular direction 161 b 1 but larger than threshold angular 161a1 of FIGURE 4b, additional shifting of picture 100 would revert to the slower rate that existed immediately prior to crossing threshold angular direction 161b of FIGURE 4c. When the viewing angular direction of viewer 160 becomes smaller than threshold angular direction 161a1 of FIGURE 4b, additional shifting of picture 100 ceases and shifting picture 100 is held in suspense in the same shifted or pan state accumulated immediately prior to crossing threshold angular direction 161a1.

As a result of, for example, the previously discussed shift of picture 100 to the left of FIGURE 4c, viewer 160 is likely to turn the head in the opposite direction that is to the right of viewer 160, as shown in FIGURE 4d. Threshold angular direction 161 a' extends from perpendicular direction line 172 towards the left side of line 172. As long the viewing angular direction of as viewer 160 is within an angular range that is smaller than threshold angular direction 161a', any change in shifting of picture 100 remains suspended, as explained before. On the other hand, should viewer 160 viewing angular direction exceed or cross threshold angular direction 161 a', dynamically tracking pan function would apply in the opposite direction for shifting picture 100 to the right of FIGURE 4d that is to the left with respect to viewer 160 or towards center 110 of display screen 106, as shown by an arrow 174. Except as further explained, the aforementioned features associated with, for example, angular directions 161a, and 161b are similarly applicable to angular directions 161 a' and 161b', respectively, that are located at the left side of perpendicular direction line 172.

Advantageously, the magnitude of, for example, each of threshold angular directions 161a' and 161 b' of FIGURE 4d varies adaptably in accordance with the amount of pre-existing shifting of picture 100 that has accumulated until the additional shifting of picture 100 to the left side of FIGURE 4c has been accumulated and held in suspense.

It should be understood that the features that are described later on with respect to FIGURES 4a-4d, are symmetrically applicable to a symmetrical situation in which the object, not shown, displayed in display screen 106 in portion 105a of FIGURE 5a, moves along horizontal line 110a, instead, towards a side edge 112 of screen 106 that is at the left of each of FIGURES 4a, 4b, 4c and 4d when picture 100 is zoomed center. For example, in FIGURE 4a, angular directions 161a' and 161b' are equal to angular directions 161a and 161b, respectively.

On the other hand, advantageously, the magnitude of each of threshold angular directions 161 a' and 161 b' of FIGURE 4d, that is applicable to the situation, described before with respect to FIGURE 4d, in which pre-existing shifting of picture 100 is present, the magnitude of each of angular directions 161a' and 161b' is smaller than in FIGURE 4a, respectively. This feature, advantageously, facilitates a quick return to the non-shifted, zoomed center of picture 100 of FIGURE 4a.

Dynamically tracking tilt function is performed in an analogous way to dynamically tracking pan function. In implementing the dynamically tracking pan function, picture shift occurs in the horizontal direction, as explained before; whereas in implementing the dynamically tracking tilt function, picture shift occurs in the vertical direction. Also, it should be understood that, instead of having pan/tilt function that changes at discrete threshold angular directions, changes in the pan/tilt function can occur in a non-discrete continuous manner angular directions.

Each of FIGURES 5a and 5b depicts a perimeter 261 a and a perimeter 261b. Perimeter 261a includes threshold angular directions 161a and 161a' in the horizontal direction of horizontal line 110a. Similarly, perimeter 261b includes threshold angular directions 161b and 161b'. A corresponding portion of each of perimeter 261 a and 261 b also includes threshold angular directions that are associated with initiating shifting of picture 100 in the vertical direction to provide dynamically tracking tilt function.

In FIGURE 5a, picture 100 is zoomed centered. Therefore, perimeters 261a and 261b are symmetrical in the horizontal direction with respect to center 110. On the other hand, in FIGURE 5b, picture 100 is already pre-shifted. Therefore, perimeters 261 a and 261b are asymmetrical in the horizontal direction with respect to center 110 in a manner to provide adaptable dynamically tracking pan function, as explained before.

Assume that when picture 100 is shifted such as in, for example, in FIGURE 5b, the scene depicted in picture 100 abruptly changed so that the aforementioned moving object is no longer relevant to viewer 160 of FIGURE 3a or 3b. Advantageously, video processor 155 of FIGURE 2 includes a detector, not shown, responsive to video/audio signal 156a for detecting the occurrence of the scene change to generate a reset signal 155b that is coupled to zoom, pan/tilt function controller 154 for overriding the accumulated shifting of picture 100 of FIGURE 5b in a manner to center picture 100 as in FIGURE 5a. This feature, advantageously, facilitates a quick return to the non-shifted centered picture 100 of FIGURE 4a upon the occurrence of a scene change.

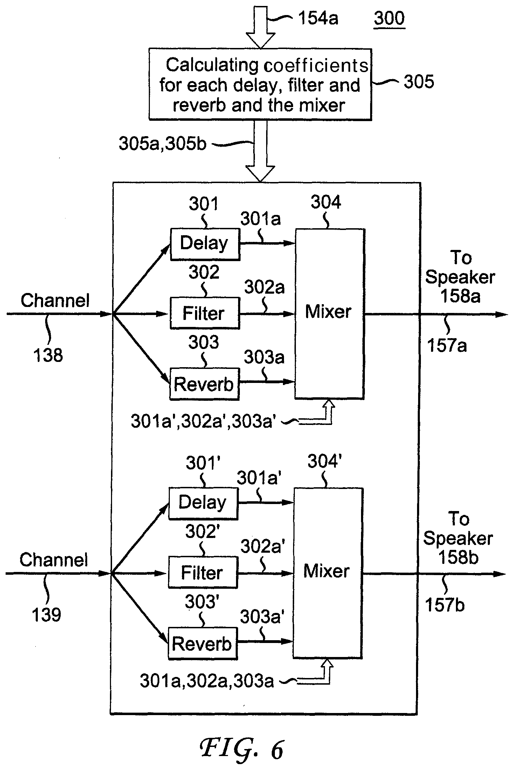

FIGURE 6 depicts a console 300, embodying an inventive feature, that is included in audio processor 157 of FIGURE 2. Similar symbols and numerals in FIGURES 1a-1c, 2, 3a, 3b, 4a-4d, 5a, 5b and 6 indicate similar items or functions. Console 300 of FIGURE 6 receives a pair of stereo audio channels, 138 and 139. Channels 138 and 139 are derived in a conventional manner, not shown, in audio processor 157 from video/audio signal 156a of FIGURE 2.

Channel 138 of FIGURE 6 is applied through three parallel signal paths to an audio mixer 304. It is delayed in a delay 301 to produce a delayed signal 301 a; it is filtered in a filter 302 to produce a filtered signal 302a and it is reverbed in a reverb stage 303 to produce a reverbed signal 303a. Similarly, channel 139 is applied through three parallel signal paths to an audio mixer 304'. It is delayed in a delay 301' to produce a delayed signal 301a'; it is filtered in a filter 302' to produce a filtered signal 302a' and it is reverbed in a reverb stage 303' to produce a reverbed signal 303a'. Mixer 304 combines signals 301a, 302a, 303a, 301a', 302a' and 303a' to generate output signal 157a for driving speaker 158a. Mixer 304' also combines signals 301 a, 302a, 303a, 301a', 302a' and 303a' to generate output signal 157b for driving speaker 158b. As explained before, it is well known to process a pair of stereo signals such as channels 138 and 139 in such a way that the sound produced by speakers such as 158a and 158b appears to a viewer/listener as being originated in locations, shifted relative to where the actual speakers are physically located.

In carrying out an inventive feature, output signal 154a that controls zoom, pan/tilt function, as explained before, is also applied to a programmable logic array (PLA) 305 for producing a set of coefficients 305a that are collectively applied to delay 301, filter 302, reverb stage 303 and mixer 304. PLA 305 also produces, a second set of coefficients 305b that are collectively applied to delay 301', filter 302', reverb stage 303' and mixer 304'. Coefficients 305a and 305b change dynamically in accordance with signal 154a to produce dynamic virtual shift of the sound sources. For obtaining a corresponding virtual sound source shift, coefficients 305a and 305b dynamically vary in accordance with the present shift of picture 100 of FIGURES 4a-4d.

In accordance with an inventive feature, signals 157a and 157b of FIGURES 2 and 6 generated by enhanced audio processor 157 drive loudspeakers 158a and 158b, respectively, in a manner to make viewer 160 of FIGURES 4a-4d perceive the sound produced in loudspeakers 158a and 158b of FIGURE 2 as dynamically changing in accordance with the dynamically tracking pan/tilt function. It should be understood that this arrangement is not limited to a pair of speakers but may include systems like the surround sound speakers or the like.

Thus, as the displayed image shifts by the dynamically tracking pan/tilt function, the locations from which the sound sources are perceived to originate also follow the shifted or zoomed displayed image to form virtual shift of the sound. Coefficients 305a and 305b of FIGURE 6 that are required for each selected virtual shift of loudspeakers 157 and 158 can be programmed prior to installation or use by computation according to the teaching of the prior art and/or by experimentation that might consider the size of a room containing loudspeakers 157 and 158. As signal 154a change, the selection of coefficients 305a and 305b of FIGURE 5 change in a dynamic manner.

## Claims

1. A video display apparatus, comprising:
a source of a video/audio signal containing picture and audio information associated with a picture to be displayed on a display screen;
a sensor for sensing a viewing direction of a viewer with respect to said display screen; and
a processor responsive to an output signal of said sensor and coupled to said display screen for applying a pan/tilt function to said displayed picture to shift said displayed picture with respect to said display screen in a manner that varies in accordance with corresponding variations in said viewing direction; and
an audio processor responsive to said video/audio signal and coupled to a plurality of audio transducers for producing sound therein, said audio processor being responsive to said output signal of said sensor for dynamically varying a virtual shift of said sound produced in said transducers in a manner that varies in accordance with corresponding variations in said viewing direction.

2. A video display apparatus according to Claim 1 wherein said transducers comprise a plurality of loudspeakers.

3. A video display apparatus according to Claim 1 wherein said virtual shift is performed by mixing a pair of stereo signals.

4. A video display apparatus according to Claim 1 wherein said audio processor is further responsive to content of said picture for varying the virtual shift in response to a change in said displayed picture content.

5. A video display apparatus comprising,
a source of a video/audio signal containing picture information and audio information associated with a picture to be displayed on a display screen;
a processor is responsive to a zoom command of a viewer and coupled to said display screen for applying a zoom function with respect to said displayed picture; and
an audio processor responsive to said zoom command and coupled to a plurality of audio transducers for modifying audio signals applied to said audio transducers to vary a virtual shift of a sound produced in said transducers in accordance with said zoom command.

## Patentansprüche

1. Videoanzeigevorrichtung, die umfasst:
eine Quelle für ein Video/Audio-Signal, das Bild- und Audioinformationen enthält, die einem auf einem Anzeigebildschirm anzuzeigenden Bild zugeordnet sind;
einen Sensor zum Erfassen einer Sehrichtung eines Betrachters in Bezug auf den Anzeigebildschirm; und
einen Prozessor, der auf ein Ausgangssignal des Sensors anspricht und der mit dem Anzeigebildschirm gekoppelt ist, um auf das angezeigte Bild eine Schwenk/Kipp-Funktion anzuwenden, um das angezeigte Bild in Bezug auf den Anzeigebildschirm in einer Weise zu verschieben, dass es sich in Übereinstimmung mit entsprechenden Veränderungen der Sehrichtung verändert; und
einen Audioprozessor, der auf das Video/Audio-Signal anspricht und der mit mehreren Schallwandlern gekoppelt ist, um darin Schall zu erzeugen, wobei der Audioprozessor auf das Ausgangssignal des Sensors anspricht, um eine virtuelle Verschiebung des in dem Wandler erzeugten Schalls dynamisch in einer Weise zu verändern, dass sie sich in Übereinstimmung mit entsprechenden Veränderungen der Sehrichtung verändert.

2. Videoanzeigevorrichtung nach Anspruch 1, wobei die Wandler mehrere Lautsprecher umfassen.

3. Videoanzeigevorrichtung nach Anspruch 1, wobei die virtuelle Verschiebung durch Mischen eines Paars von Stereosignalen ausgeführt wird.

4. Videoanzeigevorrichtung nach Anspruch 1, wobei der Audioprozessor ferner auf Inhalt des Bilds anspricht, um die virtuelle Verschiebung in Ansprechen auf eine Änderung des angezeigten Bildinhalts zu verändern.

5. Videoanzeigevorrichtung, die umfasst:
eine Quelle eines Video/Audio-Signals, das Bildinformationen und Audioinformationen enthält, die einem auf einem Anzeigebildschirm anzuzeigenden Bild zugeordnet sind;
einen Prozessor, der auf einen Zoom-Befehl eines Betrachters anspricht und der mit dem Anzeigebildschirm gekoppelt ist, um eine Zoom-Funktion in Bezug auf das angezeigte Bild anzuwenden; und
einen Audioprozessor, der auf den Zoom-Befehl anspricht und der mit mehreren Schallwandlern gekoppelt ist, um an die Schallwandler angelegte Audiosignale modifizieren, um eine virtuelle Verschiebung eines in den Wandlern erzeugten Schalls in Übereinstimmung mit dem Zoom-Befehl zu verändern.

## Revendications

1. Appareil d'affichage de vidéo comprenant :
une source de signal vidéo/audio contenant des informations d'image et audio associées à une image à afficher sur un écran ;
un capteur pour détecter une direction d'observation d'un observateur par rapport audit écran ; et
un processeur réagissant à un signal de sortie dudit capteur et couplé audit écran pour appliquer une fonction de panoramique/d'inclinaison à ladite image affichée afin de décaler ladite image affichée par rapport audit écran de sorte qu'elle varie en fonction de variations correspondantes dans ladite direction d'observation ; et
un processeur audio réagissant audit signal vidéo/audio et couplé à une pluralité de transducteurs audio pour produire du son, ledit processeur audio réagissant audit signal de sortie dudit capteur pour faire varier de façon dynamique un décalage virtuel dudit son produit dans lesdits transducteurs de sorte qu'elle varie en fonction de variations correspondantes dans ladite direction d'observation.

2. Appareil d'affichage vidéo selon la revendication 1 dans lequel lesdits transducteurs comprennent une pluralité de haut-parleurs.

3. Appareil d'affichage vidéo selon la revendication 1 dans lequel ledit décalage virtuel est effectué par le mélange d'une paire de signaux stéréo.

4. Appareil d'affichage vidéo selon la revendication 1 dans lequel lesdits processeurs audio réagissent en outre au contenu de ladite image pour faire varier le décalage virtuel en réponse à un changement dans le contenu de ladite image affichée.

5. Appareil d'affichage de vidéo comprenant
une source de signal vidéo/audio contenant des informations d'image et des informations audio associées à une image à afficher sur un écran ;
un processeur réagissant à une commande de zoom d'un observateur et couplé audit écran pour appliquer une fonction de zoom par rapport à ladite image affichée ; et
un processeur audio réagissant à ladite commande de zoom et couplé à une pluralité de transducteurs audio pour modifier les signaux audio appliqués auxdits transducteurs audio pour faire varier un décalage virtuel d'un son produit dans lesdits transducteurs conformément à ladite commande de zoom.
